(19) Europäisches Patentamt
European Patent Office
Office européen des brevets

(11) Publication number: **0 308 809 A2**

# (12) EUROPEAN PATENT APPLICATION

(21) Application number: 88115090.8

(51) Int. Cl.4: C08G 61/08

(22) Date of filing: 15.09.88

(30) Priority: 18.09.87 JP 232542/87
18.09.87 JP 232543/87
29.07.88 JP 188161/87

(43) Date of publication of application:
29.03.89 Bulletin 89/13

(84) Designated Contracting States:
BE DE FR GB IT NL SE

(71) Applicant: NIPPON ZEON KABUSHIKI KAISHA
6-1, Marunouchi 2-chome
Chiyoda-ku Tokyo(JP)

(72) Inventor: Yamato, Motoyuki
Ooiso Koma Haitsu 2-232, 2-21, Koma,
Ooiso-cho
Naka-gun, Kanagawa(JP)
Inventor: Ueno, Susumu
34-22-312, Akazutsumi 3-chome, Setagaya-ku
Tokyo(JP)
Inventor: Chono, Koji
1410-13, Nakashima, Kurashiki-shi
Okayama(JP)
Inventor: Ishimaru, Yoshiharu
3-10, Kita-karasuyama 3-chome, Setagaya-ku
Tokyo(JP)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

## (54) Machinable stock and machined shaped article.

(57) A thermosetting machinable stock having an ignition point of at least 120°C and a glass transistion point of at least 80°C, which has been obtained by subjecting a norbornene monomer having a tricyclic or higher cyclic structure to ring-opening bulk polymerization in the presence of an antioxidant.

EP 0 308 809 A2

Xerox Copy Centre

# MACHINABLE STOCK AND MACHINED SHAPED ARTICLE

## BACKGROUND OF THE INVENTION

### (1) Field of the Invention

The present invention relates to a machinable stock composed of a thermosetting norbornene polymer. and a machined shaped article made therefrom. More particularly, the present invention relates to a machinable stock composed of a thermosetting norbornene polymer having an excellent machinability and safety, a light weight, and a good dimensional stability, and a machined shaped article made therefrom.

### (2) Description of the Related Art

The technique of forming a processing stock such as a rod, a plate, a tube or a sheet from engineering plastics such as a polyimide resin, an aromatic polyamide resin, a polyacetal resin, super-high-molecu. lar-weight polyethylene, polybutylene terephthalate or a polycarbonate resin, and subjecting the stock to machining such as cutting as in the case of a metal stock is known.

The machining of plastic stock is superior to an injection molding thereof in various points. For example, a part of a small lot can be obtained at a lower cost, a part having a high precision can be obtained, and a part having a shape which is difficult to form by injection molding, can be easily prepared. Moreover, standard tools used for the machining of metals can be used for the machining of plastic stocks.

Nevertheless, although conventional engineering plastics have an excellent heat resistance, mechanical strength, and the like, they have a problem such that, since they are thermoplastic resins and although the heat resistance is high, the temperature is elevated to a level close to the melting point by the friction heat generated at the machining step to melt the processing stock and a smooth surface is difficult to obtain, and therefore, the machined surface should be cooled. Moreover, since stocks are prepared by injection molding, the formation of a large part is difficult and a mold is expensive, and therefore, the molding is restricted. A so-called cast nylon product is a molded nylon article obtained by directly casting monomers in a mold and carrying out polymerization and molding in the mold, and according to this method, a larger product can be prepared as compared with injection molding or extrusion molding. Nevertheless, the product has a problem such that the water-absorbing property is conspicuous and the dimensional stability, which is very important for the processing stock, is poor.

## SUMMARY OF THE INVENTION

The present inventors carried out research with a view to developing a light and cheap machinable stock having a good machinability, dimensional stability, and heat resistance, and as a result, found that the polymer obtained by subjecting a polycyclic norbornene monomer to ring-opening bulk polymerization in the presence of a large amount of an antioxidant is advantageous, and the present invention was completed based on this finding.

In accordance with one aspect of the present invention, there is provided a thermosetting machinable stock having an ignition point of at least 120 °C and a glass transition point of at least 80 °C, which has been obtained by subjecting a norbornene monomer having a tricyclic or higher cyclic structure to rin-opening bulk polymerization in the presence of an antioxidant.

In another aspect of the present invention, there is provided a shaped article obtained by machining the above-mentioned thermosetting machinable stock.

## DETAILED DESCRIPTION OF THE INVENTION

The essential elements of the present invention will now be described in detail.

(Norbornene monomer)

The monomer used as the starting material of the machinable stock in the present invention is a polycyclic norbornene monomer having a tricyclic or higher cyclic structure. Since the norbornene monomer having a tricyclic or higher cyclic structure is used, a polymer having an high heat distortion temperature is obtained, and a high heat resistance required for a machinable stock can be attained.

In the present invention, the formed polymer must be of the thermosetting type. For this purpose, a crosslinking monomer is used in an amount of at least 10% by weight, preferably at least 30% by weight, based on the total monomers. In the case of a polymer of the thermosetting type, fusion by the friction heat at the machining step can be prevented, and the machinability can be prominently improved.

As the norbornene monomer having a tricyclic or higher cyclic norbornene monomer, there can be mentioned tricyclic monomers such as dicyclopentadiene and dihydrodicyclopentadiene, tetracyclic monomers such as tetracyclododecene, pentacyclic monomers such as tricyclopentadiene, and heptacyclic monomers such as tetracyclopentadiene. Alkyl, alkylidene and aryl substitution products of these monomers can be used, which include, for example, methyl-, ethyl-, propyl- or butyl- substitution product, an ethylidene-substituted product, and a phenyl- or tolyl-substituted product.

The crosslinking monomer is a polycyclic norbornene monomer having at least two reactive double bonds. For example, there can be mentioned dicyclopentadiene, tricyclopentadiene and tetracyclopentadiene. Accordingly, where the norbornene monomer is the same as the crosslinking monomer, another crosslinking monomer is not particularly necessary.

These norbornene monomers can be used singly or in the form of a mixture of two or more thereof.

The norbornene monomer having a tricyclic or higher cyclic monomer can be obtained by heat-treating a dicyclopentadiene. As the heat treatment method, there can be mentioned a method in which a dicyclopentadiene is heated at a temperature of 120 to 250° in an inert gas atmosphere for 0.5 to 20 hours. By this heat treatment, a monomer mixture comprising pentacyclopentadecadiene and the unreacted dicyclopentadiene is obtained. The heat treatment may be carried out in the copresence of a dienophile such as a bicyclic norbornene monomer, styrene or its derivative, an unsaturated carboxylic acid ester, or an unsaturated nitrile.

In the present invention, a bicyclic norbornene monomer that can be ring-opening-polymerized, such as 2-norbornene, 5-methyl-2-norbornene, 5-ethylidene-2-norbornene or 5-phenyl-2-norbornene, or a monocyclic cyclo-olefin such as cyclobutene, cyclopentene, cyclopentadiene, cyclo-octene or cyclododecene can be used together with at least one of the above-mentioned norbornene monomers having a tricyclic or higher cyclic structure, as long as the attainment of the object of the present invention is not prevented.

(Methathesis catalyst system)

In the present invention, any known methathesis catalyst (see, for example, Japanese Unexamined Patent Publications No. 58-127,728, No. 58-129,013, No. 59-51,911, No. 60-79,035, No. 60-186,511 and No. 126,115) can be used without limitation for the bulk polymerization of the norbornene monomer.

As the methathesis catalyst, there can be mentioned halides, oxyhalides, oxides, and organic ammonium salts of tungsten, molybdenum and tantalum. As preferred examples, there can be mentioned tungsten compounds such as tungsten hexachloride, tungsten oxytetrachloride, tungsten oxide, tridodecylammonium tungstate, methyltricaprylammonium tungstate, tri(tridecyl)ammonium tungstate, and trioctylammonium tungstate; molybdenum compounds such as molybdenum pentachloride, molybdenum oxytrichloride, tridodecylammonium molybdate, methyltricaprylammonium molybdate, tri(tridecyl)ammonium molybdate, and trioctylammonium molybdate; and tantalum compounds such as tantalum pentachloride. Use of a catalyst soluble in the norbornene monomer used for the reaction is preferred, and from this viewpoint, the use of an organic ammonium salt is recommended. Where the catalyst is a halide, the catalyst can be solubilized by pretreating the catalyst with an alcohol or phenol compound. If necessary, a Lewis base such as benzonitrile or tetrahydrofuran or a chelating agent such as acetylacetone or an alkyl acetoacetate can be used in combination with the catalyst, to prevent a premature polymerization.

Alkylaluminum halides, alkoxyalkylaluminum halides, aryloxyalkylaluminum halides and organic tin compounds can be used as the activator (co-catalyst). As preferred examples, there can be mentioned ethylaluminum dichloride, diethylaluminum monochloride, ethylaluminum sesquichloride, diethylaluminum iodide, ethylaluminum diiodide, propylaluminum dichloride, propylaluminum diiodide, isobutylaluminum dichloride, ethylaluminum dibromide, methylaluminum sesquichloride, methylaluminum sesquibromide, tetrabutyltin, and precondensates of alkylaluminum halides with alcohols.

Among these activators, alkoxyalkylaluminum halides and aryloxyalkylaluminum halides are advantageous in operation because these organoaluminum halides exhibit an appropriate pot life at room temperature even when the activator is mixed with the catalyst component (see, for example, Japanese Unexamined Patent Publication No. 59-51,911). An alkylaluminum halide involves a problem in that polymerization is instantaneously started when it is mixed with the catalyst, but the start of the polymerization can be delayed by using a polymerization controller such as an ether, an ester, a ketone, a nitrile or an alcohol in combination with the activator (see, for example, Japanese Unexamined Patent Publications No. 58-129,013 and No. 61-120,814). If such a controller is not used, the apparatus and operation must be controlled so that a catalyst system having a short pot life can be used. In the case of a catalyst system having a short pot life, however, the reaction is promptly advanced and it is difficult to remove the reaction heat efficiently. Accordingly, preferably a catalyst system having a pot life of longer than 5 minutes, especially longer than 10 minutes, particularly especially longer than 30 minutes, at 25°C, is used.

A halogenated hydrocarbon such as chloroform, tetrachlorocarbon or hexachlorocyclopentadiene can be used in combination with the catalyst and activator (see, for example, Japanese Unexamined Patent Publication No. 60-79,035). Moreover, a halide such as tin tetrachloride, silicon tetrachloride, magnesium chloride or germanium chloride can be further added.

The methathesis catalyst is used in an amount of about 0.01 to about 50 millimoles, preferably 0.1 to 10 millimoles, per mole of the norbornene monomer. The activator (co-catalyst) is used at a molar ratio of from 0.1 to 200, preferably from 2 to 10, to the catalyst component.

Preferably both the methathesis catalyst and the activator are used in the state dissolved in the monomer, but the catalyst and activator can be used while suspended or dissolved in a small amount of a solvent, as long as the properties of the product are not substantially degraded.

(Antioxidant)

As the antioxidant that can be used in the present invention, there can be mentioned a phenolic antioxidant, a phosphorus antioxidant, an amine antioxidant and other various antioxidants for plastics and rubbers. These antioxidants can be used singly or in the form of a mixture of two or more thereof. The antioxidant is incorporated in an amount such that the ignition point of the norbornene polymer is at least 120°C, preferably at least 130°C. Namely, the antioxidant is incorporated in an amount of at least 0.5% by weight, preferably 1 to 3% by weight, based on the norbornene polymer. If the amount of the antioxidant is too small, it is impossible to raise the ignition point of the molded article to a significant degree. The upper limit of the amount of the antioxidant incorporated is not critical, but too large an amount of the antioxidant incorporated is not preferred from the economical viewpoint and sometimes results in inhibition of the polymerization. Especially, it has been found that, if an amine antioxidant is used in an amount larger than 2% by weight, the polymerization reaction is inhibited. Therefore, preferably, an amine antioxidant is used in an amount of 0.5 to 2% by weight.

As the phenolic antioxidant, there can be mentioned, for example, 4,4-dioxydiphenyl, hydroquinone monobenzyl ether, 2,4-dimethyl-6-t-butylphenol, 2,6-di-t-butylphenol, 2,6-diamylhydroquinone, 2,6-di-t-butyl-p-cresol, 4-hydroxymethyl-2,6-di-t-butylphenol, 4,4′-methylene-bis-(6-t-butyl-o-cresol), butylated hydroxyanisole, phenol condensate, butylenated phenol, dialkylphenol sulfide, high-molecular-weight polyhydric phenol and bisphenol.

As the phosphorus antioxidant, there can be mentioned, for example, aryl and alkylaryl phosphites such as tri(phenyl) phosphite and tri(nonylphenyl phosphite.

As the amine antioxidant, there can be mentioned, for example, phenyl-α-naphthylamine, 4,4′-dioctyldiphenylamine, N,N′-di-β-naphthyl-p-phenylene-diamine, N,N′-diphenyl-p-phenylenediamine, N-phenyl-N′-cyclohexyl-p-phenylenediamine, N,N′-di-o-tolyl-ethylenediamine and alkylated diphenylamine.

Various commercially available products can be used as well as the above-mentioned antioxidants. Furthermore, the antioxidant used may be copolymerizable with the monomers used. The copolymerizable antioxidant includes, for example, a norbornenyl phenol compound such as 5-(3,5-di-t-butyl-4-hydroxybenzyl)-2-norbornene (see Japanese Unexamined Patent Publication No. 57-83,522).

Usually, the antioxidant is incorporated with the norbornene polymer by previously adding the former to a reaction liquid containing the norbornene monomer in the polymerization conditions of the reaction injection molding (RIM) method stated below.

(Polymerization conditions)

In the present invention, a machinable stock is obtained by subjecting the norbornene monomer to ring-opening polymerization in the presence of the antioxidant. Substantial bulk polymerization is sufficient, and preferably an inert solvent is not used even in the step of preparing the catalyst in view of the properties of the machinable stock.

According to a preferred embodiment of the process for the preparation of a machinable stock, the norbornene monomer is divided into two liquid portions which are charged into two separate vessels, i.e., the methathesis catalyst is added to one liquid while the activator is added to the other liquid, to prepare two stable reaction solutions, the two reaction solutions are mixed together, the mixture is cast in a mold having a predetermined shape, and ring-opening bulk polymerization is carried out. A predetermined amount of the antioxidant is added to at least one of the two reaction liquids.

Preferably, to avoid the occurrence of pores in the thermoset product (i.e., machinable stock), the mold is cooled and the temperature of the mold is controlled so that the maximum curing exotherm temperature of the content in the mold does not exceed 160 °C. The casting pressure is not particularly critical and a pressure lower than 10 $kg/cm^2$ is generally sufficient. Preferably, the operation is carried out under atmospheric pressure.

The polymerization time is appropriately decided relative to the exotherm temperature. If the polymerization time is too short, it is difficult to control the maximum curing exotherm temperature at a level not exceeding 160 °C. The maximum curing exotherm temperature may exceed 160 °C, but, in this case, care must be taken so as to avoid the occurrence of pores in the molded article by adjusting the cooling conditions, e.g., gradually cooling the molded article.

Preferably components to be used for the polymerization reaction are stored in an atomosphere of an inert gas such as nitrogen gas and the operation is carried out in this inert gas atomosphere. The mold may be or may not be sealed with an inert gas.

(Optional components)

The characteristics of the machinable stock of the present invention can be modified by incorporation of various additives such as a filler, a pigment, a colorant, an elastomer, a dicyclopentadiene type heat-polymerized resin, a fire retardant and a lubricant.

The additives are incorporated in one or both of the reaction solutions.

As the filler, there can be used inorganic fillers such as glass, carbon black, talc, calcium carbonate and mica.

As the elastomer, there can be mentioned natural rubbers, polybutadiene, polyisoprene, a styrene-butadiene copolymer (SBR), styrene/butadiene/styrene block copolymer (SBS), a styrene/isoprene/styrene block copolymer (SIS), an ethylene/propylene/diene terpolymer (EPDM), an ethylene/vinyl acetate copolymer (EVA) and hydrogenation products thereof. The amount of the elastomer is appropriately determined depending upon the intended use of the machinable stock, but, preferably in the range of 0.5 to 3% by weight based on the machinable stock because of enhanced machinability.

(Properties of machinable stock)

The so-obtained machinable stock can take any of various shapes such as a round rod, a square rod, a sheet and a pipe. The stock is substantially free from pores therein and of a high quality. The diameter or thickness is at least 20 mm, preferably at least 50 mm. Since the reactive injection molding method is adopted, large stock size can be easily produced, and for example, in the case of a round rod, a product having a diameter of about 300 mm or a larger can be prepared.

The pores can be recognized by the naked eye when the cut section is inspected, and have a diameter of at least about 0.1 mm. By the expression "substantially free of pores" is meant that, when the stock is cut at intervals of 100 mm, no pores can be seen in any of the cut sections. The pores can also be recognized by applying ultrasonic wave of 0.5 to 10 MHz and inspect the disturbance of reflected wave. A commercially available ultrasonic flaw detector can be used for this purpose.

The glass transition temperature of the machinable stock is at least 80 °C, preferably at least 100 °C, especially preferably at least 130 °C, for preventing the thermal distortion in the machining step.

The ignition point of the stock is at least 120 °C, preferably at least 130 °C, as determined by the high-pressure differential thermal analysis method, wherein 10 mg of the sample frozen, pulverized and passed through a 100-mesh sieve is used. The measurement is carried out in high-pressure oxygen by using a high-pressure differential thermobalance as the measurement apparatus and the point of an abrupt rise in the differential heat curve is defined as the ignition point. If the ignition point is low, discoloration occurs at the machining step due to carbonization or the cut portion becomes brittle, or when cutting chips are directly exposed to sunlight or allowed to stand at a high temperature, spontaneous ignition often occurs.

Preferably the machinable stock of the present invention is substantially free of the unreacted norbornene monomer or a volatile solvent. These volatile components are evaporated at the machining step, to worsen the working environment, and a bad smell is generated from the machined shaped article. From this viewpoint, preferably the ignition loss is smaller than 5% by weight, especially smaller than 3% by weight, as determined by the thermobalance method wherein a plate sample having a diameter of 3 to 4 mm, which is composed of about 10 mg of the polymer, is maintained at a temperature of 400 °C in a nitrogen atmosphere at a temperature-elevating rate of 20 °C per minute.

Since the machinable stock used in the present invention has a small water-absorbing property, the dimensional stability is good, the specific gravity is not larger than 1.1, and the stock is very light, among plastics.

(Machining)

In the present invention, a shaped article having a predetermined shape can be obtained by machining this machinable stock according to the same procedures as adopted for metal blocks. The means used for the machining operation are not particularly critical. For example, thre can be mentioned lathing, screw cutting, milling, drilling, and reaming.

At the machining step, heat is generated in the stock by friction, and since an excessive heat generation causes deformation or discoloration, preferably the temperature is kept below 200 °C.

The machinable stock of the present invention can be machined into various molded articles, for example, pillows, gears, racks, cams, shafts, levers, bearings, pulleys, driving gears, rollers, flanges, wheels, wearing parts, liners, buckets, washers, sliding plates, insulators and other various parts. These machined products can be widely used in various fields for iron and metal working machinery, civil engineering and construction machinery, textile machinery, transportation and delivery machinery, food processing machinery and other known machines.

The present invention will now be described in detail with reference to the following examples and comparative examples. The scope of the invention is not limited by these examples. Note, in the examples, all of "parts" and "%" are by weight unless otherwise indicated.

Example 1

Dicyclopentadiene (hereinafter referred to as "DCP") containing 2% of a phenolic antioxidant (Irganox 259 supplied by Ciba-Geigy) was charged in two vessels. To one vessel, diethylaluminum chloride (DEAC), n-propanol and silicon tetrachloride were added at concentrations of 33 mM, 42.9 mM and 20 mM, respectively, based on DCP. To the other vessel, tri(tridecyl)ammonium molybdate was added at a concentration of 4 mM based on DCP.

Both the reaction liquids maintained at 25 °C were mixed together at a mixing ratio of 1/1 by using a gear pump and a power mixer. The mixture exhibited a pot life of about 10 minutes at 25 °C. The mixture was cast under a substantially atmospheric pressure into a steel mold having a shape shown in Table 1 and an upper side opened, from the upper portion of the mold. The conditions for removing the heat from the mold are shown in Table 1. These operations were carried out in a nitrogen atmosphere.

The so-obtained block having a shape of a round rod (machinable block) was cut at intervals of 100 mm in the longitudinal direction, and the cut sections were observed with the naked eye.

In each of the obtained blocks, the glass transition temperature (Tg) was 145 to 150 °C and the ignition loss by the thermobalance method was in the range of 2 to 3%, and it was confirmed that the reaction was sufficiently advanced.

When the ignition point was measured under an oxygen pressure of 10 $kg/cm^2$ by the differential thermal analysis, it was found that, in each of the blocks, the ignition point was higher than 120 °C.

Table 1

| | Present Invention | | | Comparison | | |
|---|---|---|---|---|---|---|
| Run No. | 1 | 2 | 3 | 4 | 5 | 6 |
| Shape of mold | | | | | | |
| Inner diameter (mm) | 50 | 75 | 100 | 75 | 75 | 75 |
| Height (mm) | 800 | 800 | 800 | 800 | 800 | 800 |
| Heat-removing method | Air cooling in open air | Water cooling in water tank | Water cooling in water tank | Air cooling in open air | Water cooling in water tank | Warm water in water tank |
| Mold temperature (°C) | 25 | 18 | 18 | 25 | 30 | 60 |
| Time required for start of exothermic reaction (minutes) | 10 | 20 | 20 | 10 | 8 | 3 |
| Maximum curing exotherm temperature (°C) | 150 | 135 | 145 | 175 | 165 | 200< |
| Presence or absence of pores*1 | A | A | A | C | B | C |

Note

*1: The presence or absence of pores having a diameter of at least 0.1 mm on the section cut at an interval of 100 mm. The case where no pores were observed is indicated by A, the case where 1 to 9 pores were observed is indicated by B, and the case where at least 10 pores were observed is indicated by C.

As apparent from the results shown in Table 1, where the bulk polymerization is carried out while controlling the maximum curing exotherm temperature to a level not exceeding 160°C according to the present invention (Runs 1 through 3), no pores can be found in the cut sections of the block, whereas in the comparative case where the maximum curing exotherm temperature is high and exceeds 160°C (Runs 4 and 5), many pores are formed. In the conventional RIM method using a norbornene monomer, the reaction liquid is cast in a mold after the mold has been heated. If this method is adopted in the present invention, the maximum curing exotherm temperature exceeds 200°C, smoking occurs at the reaction and a satisfactory stock can not be obtained (Run 6).

Example 2

To check the presence or absence of pores relative to the pot life of the reaction solution and the size (diameter) of a round rod-shaped block, various round rod-shaped blocks differing in diameter were prepared in the same manner as described in Example 1, except that the amount of n-propanol added was changed so that the concentration of n-propanol was 49.3 mM based on DCP. The pot life of the reaction solution was at least 1 hour at 25°C. The shape of the mold and the conditions for removing the heat from the mold were as shown in Table 2.

In each of the so-obtained blocks, the Tg was 145 to 150°C the ignition loss was 2 to 3% as determined by the thermobalance method, and the ignition point as determined by differential thermal analysis was higher than 120°C.

Table 2

| | Present Invention | | |
|---|---|---|---|
| Run No. | 7 | 8 | 9 |
| Shape of mold | | | |
| Inner diameter (mm) | 75 | 150 | 200 |
| Height (mm) | 800 | 800 | 800 |
| Heat-removing method | Air cooling | Water cooling | Water cooling |
| Mold temperature (°C) | 25 | 40 | 40 |
| Time required for start of exothermic reaction (minutes) | 300 | 195 | 60 |
| Maximum curing exothermic temperature (°C) | 130 | 146 | 149 |
| Presence or absence of pores* | A | A | A |

* Determined by the same procedure as described in the footnote of Table 1.

From the results shown in Table 2, it can be understood that, if the pot life is prolonged, the time required for the start of the exothermic reaction is prolonged and the productivity is thus relatively reduced, but a block having a larger diameter can be obtained without a formation of pores.

Example 3

DCP containing 2% of a phenolic antioxidant (Irganox 259) was charged in two vessels. To one vessel, diethylaluminum chloride (DEAC), n-propanol and silicon tetrachloride were added at concentrations of 33 mM, 42.9 mM and 20 mM, respectively, based on DCP. To the other vessel, tri(tridecyl)ammonium molybdate was added at a concentration of 4 mM based on DCP.

Both the reaction liquids were mixed together at a mixing ratio of 1/1, and the mixture was cast in a jacket-equipped steel mold having an inner diameter of 100 mm and a height of 800 mm, in which the water temperature was maintained at 18 °C. After a lapse of about 20 minutes, curing was started, and 15 minutes after the starting of the curing, the mold was disintegrated to obtain a round rod-shaped machinable block (rod block) having a diameter of 100 mm and a height of 800 mm. These operations were carried out in a nitrogen atmosphere.

A part of the so-obtained machinable block was sampled, and the glass transition point (Tg), the ignition point, the water absorption (JIS K-6911), and the ignition loss were determined. It was found that the Tg was 150 °C, the ignition point was 140 °C, the water absorption was 0.05% (24 hours), and the ignition loss was 2.3%.

The ignition point was measured in the following manner. Namely, a part of the machinable stock was sampled, frozen and pulverized, and passed through a 100-mesh sieve. Then, 10 mg of the obtained powder was taken in an aluminum dish, and the ignition point was measured by a high-pressure differential thermal analysis apparatus under an oxygen pressure of 10 kg/cm$^2$ at a temperature-elevating rate of 20 °C per minute.

Then, the round rod block was machined by using a lathe to prepare a plastic resin roll.

The lathe Model LEO-100 (A) supplied by Washino kikai K.K. was operated at a rotation number of 750 rpm, a feed speed of 0.025 mm/rpm, and a cut depth of 0.020 mm. The machining operation was carried out by using a cutting tool (Model G2 32-4). The formed plastic resin roll had an outer diameter of 90 mm and a length of 800 mm. The ignition property and machinability at the machining operation and the finish state of the shaped article were evaluated. Ignition did not occur at the machining step and fusion did not occur due to friction heat, and the machining operation was performed smoothly. Moreover, a smell was not generated at the machining step. The finished surface of the shaped article was good and lustrous, and the shaped article had a small water absorption and a good dimensional stability.

For comparison, polycarbonate (PC) and super-high-molecular-weight polyethylene (PE) as commercially available machinable stocks were machined in the same manner as described above. In each case, the stock per se and cutting chips were fused and a smooth and lustrous finished surface could not be obtained.

Comparative Example 1

A round rod-shaped block was prepared in the same manner as described in Example 1 except that the antioxidant, Irganox 259, was not used, and the block was machined in the same manner as described in Example 1 to obtain a plastic resin roll. The evaluation results are shown in Table 3.

Examples 4 and 5

By using monomer compositions shown in Table 3, round rod-shaped blocks were prepared in the same manner as described in Example 3.

The physical properties, machinability, and finish state of the product, determined with respect to each of the blocks obtained in Examples 3 through 5, are shown in Table 3. For comparison, the machinability of commercially available polycarbonate and super-high-molecular-weight polyethylene was evaluated. The results are shown in Table 3.

As apparent from the results shown in Table 3, the machined shaped article of the present invention has a high Tg and an excellent heat resistance, and furthermore, the water absorption is small, the specific gravity is low, and the weight is light. Moreover, the ignition point is high, the machinability is good, and the finish state is good.

Table 3

| | | Example | | | Comparison | | |
|---|---|---|---|---|---|---|---|
| | | 1 | 2 | 3 | Comparative Example 1 | PE | PC |
| Run No. | | 10 | 11 | 12 | 13 | 14 | 15 |
| (Monomer composition) | | | | | | | |
| DCP | | 100 | 50 | 50 | 100 | - | - |
| Cyclopentadiene trimer*-7 | | 0 | 50 | 0 | 0 | - | - |
| Methyltetracyclodecene | | 0 | 0 | 50 | 0 | - | - |
| Tg (°C) | | 150 | 200 | 175 | 150 | - | 150 |
| Water absorption (24 hours, %) | | 0.05 | 0.05 | 0.04 | 0.05 | 0.01 | 0.15 |
| Specific gravity | | 1.03 | 1.03 | 1.04 | 1.03 | 0.94 | 1.2 |
| Ignition point (°C) | | 140 | 142 | 138 | 80 | - | - |
| Ignition loss (%) | | 2.3 | 2.1 | 2.4 | 2.2 | - | - |
| Machinability | Ignition by friction heat at machining *-1 | A | A | A | C | A | A |
| | Fusion of resin by friction heat at machining *-2 | A | A | A | A | C | B |
| | Generation of smell or vapor at machining *-3 | A | A | A | A | A | A |
| Finish state of product | Luster*-4 | A | A | A | B | C | C |
| | Discoloration*-5 | A | A | A | A | B | A |
| Spontaneous ignition of cutting chips *-6 | | Not occurred | Not occurred | Not occurred | Occurred | Not occurred | Not occurred |

Note

*-1 A: no ignition, C: ignition

*-2 A: no fusion, B: fusion advanced with the lapse of time after start of machining, C: fusion just after start of machining

*-3 A: no smell, C: smell generated

*-4 A: lustrous when observed by naked eye, B: slightly lustrous when observed by naked eye, C: not lustrous when observed by naked eye

*-5 A: no discoloration, B: partial blackening, C: blackening of entire surface

*-6 Cutting chips having a thickness of about 0.020 mm (about 3 liters) were collected in a plastic resin backet and stored in a warm chamber maintained at 40°C, and a check was made to determine whether or not spontaneous ignition had occurred

*-7 Mixture of about 80% of an asymmetric trimer and about 20% of a symmetric trimer

Examples 6 through 11

Round rod-shaped blocks were prepared in the same manner as described in Example 3 except that the kind and amount of the antioxidant were changed as shown in Table 4, and from these blocks, plastic resin rolls were prepared in the same manner as described in Example 3. The ignition points of the obtained blocks were as shown in Table 4, and in each case, spontaneous combustion of cutting chips was not observed. The machinability and the finish state of the product were substantially the same as in Example 3.

The use antioxidants shown in Table 4 are as follows.

N-1:

phenolic antioxidant supplied by Ciba-Geigy, which is represented by the following formula:

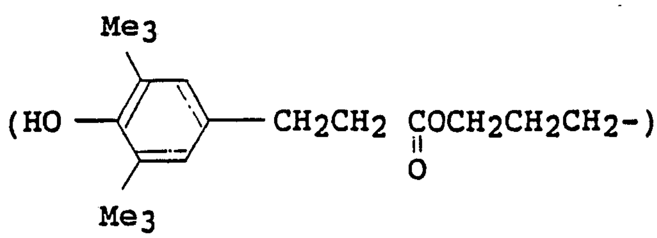

N-2:

Phenolic antioxidant supplied by Kawaguchi Kagaku, which is represented by the following formula:

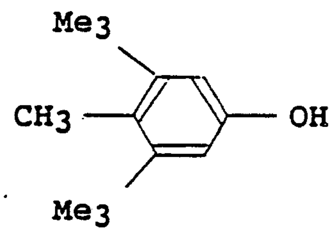

N-3:

Phenolic antioxidant supplied by Ethyl Corporation, which is represented by the following formula:

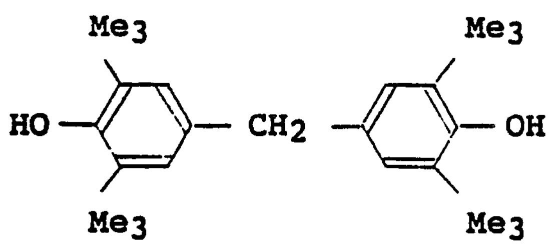

N-4:

Phenolic antioxidant supplied by Ciba-Geigy, which is represented by the following formula:

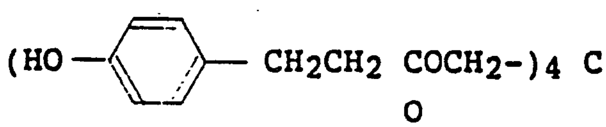

N-5:

Phosphorus antioxidant supplied by Kawaguchi Kagaku, which is composed of tri(nonylphenyl) phosphite

N-6:

Amine antioxidant supplied by Seiko Kagaku, which is composed of dialkyldiphenylamine.

Table 4

| | | Examples | | | | | |
|---|---|---|---|---|---|---|---|
| | | 6 | 7 | 8 | 9 | 10 | 11 |
| Irganox 249 (%) | N-1 | 1 | | | | | |
| BHT | N-2 | | 2 | | | | |
| Ethanox 702 | N-3 | | | 2 | | | |
| Irganox 1010 | N-4 | | | | 2 | | |
| TNP | N-5 | | | | | 1 | |
| OD-3 | N-6 | | | | | | 1 |
| Ignition point | (°C) | 135 | 144 | 131 | 128 | 125 | 135 |

Example 12

A round rod-shaped machinable block was prepared in the same manner as described in Example 3 except that a monomer mixture composed of 70% of DCP and 30% of a cyclopentadiene trimer (a mixture of about 80% of an unsymmetrical type monomer and about 20% of a symmetrical type monomer) was used as the monomer and 1% of a styrene/isoprene/styrene block copolymer (SIS) (Quincook 3420 supplied by Nippon Zeon Co.) was incorporated in the monomer mixture. The machinable block had a glass transition temperature (Tg) of 187°C.

The machinability of the machinable block was evaluated. For comparison, the machinability of stainless steel SUS 304 was evaluated. The machining conditions and the results are shown in Table 5.

As apparent from the results shown in Table 5, the machinable stock of the present invention has an excellent machinability and can be machined with precision of approximately the same level as that of stainless steel.

Table 5

| Machinable stock | Machinable stock of present invention | | | Stainless steel SUS 304 | | |
|---|---|---|---|---|---|---|
| Machining conditions*1 | A | B | C | A | B | C |
| Surface roughness (µm) | | | | | | |
| Average surface roughness (Rz) | 11.2 | 12.5 | - | 11.5 | *2 | - |
| Maximum surface roughness (Rmax) | 16.2 | 16.2 | - | 18.0 | *2 | - |
| Hole diameter | | | | | | |
| Immediately after drilling (mm) | - | - | 16±0.02 | - | - | 16±0.02 |
| One hour after drilling (mm) | - | - | 16±0.02 | - | - | 16±0.02 |

*1 A: pitch 5.7/100, number of revolutions 1000 ppm, cut-to-thickness 1 mm
B: pitch 5.7/100, number of revolutions 750 ppm, cut-to-thickness 4 mm
C: drill diameter 16 mm, number of revolutions 250 rpm, depth 50 mm
As machining oil, an emulsion type machine oil and an ordinary machining oil were used for the machining stock of the present invention and the stainless steel, respectively.

*2 Impossible to cut because of too large load.

According to the present invention, a thermosetting machinable stock having a reduced water absorption and a good dimensional stability can be prepared. A machined shaped article can be made therefrom without discoloration or deformation at the machining step and without risk of ignition at the machining step or a spontaneous combustion of cutting chips. Furthermore, the machinable stock of the present invention has an excellent machinability, a light weight, and a high heat resistance. Moreover, a shaped article having a large size can be prepared by the RIM method. Accordingly, the machined shaped article of the present

invention is superior to conventional machined shaped articles.

## Claims

1. A thermosetting machinable stock having an ignition point of at least 120°C and a glass transistion point of at least 80°C, which has been obtained by subjecting a norbornene monomer having a tricyclic or higher cyclic structure to ring-opening bulk polymerization in the presence of an antioxidant.

2. The thermosetting machinable stock according to claim 1, which has an ignition loss smaller than 5% by weight as determined at a temperature of 400°C in a nitrogen atmosphere and at a temperature-elevating rate of 20°C per minute.

3. The thermosetting machinable stock according to claim 1, which has a diameter or thickness of at least 20 mm.

4. The thermosetting machinable stock according to claim 1, which has been obtained from a monomer mixture comprising the norbornene monomer having a tricyclic or higher cyclic structure, and at least 10% by weight, based on the total monomers, of a crosslinking monomer.

5. The thermosetting machinable stock according to claim 1, wherein the amount of the antioxidant is at least 0.5% by weight based on the resulting polymer.

6. The thermosetting machinable stock according to claim 1, which contains 0.5 to 3% by weight, based on the machinable stock, of an elastomer.

7. The thermosetting machinable stock according to claim 1, which has a glass transition point of at least 100°C and an ignition loss smaller than 3% by weight as determined at a temperature of 400°C in a nitrogen atmosphere and at a temperature elevating rate of 20°C per minute.

8. The thermosetting machinable stock according to claim 7, which has a diameter or thickness of at least 50 mm.

9. A shaped article obtained by machining a thermosetting machinable stock having an ignition point of at least 120°C and a glass transition point of at least 80°C, which has been obtained by subjecting a norbornene monomer having a tricyclic or higher cyclic structure to ring-opening bulk polymerization in the presence of an antioxidant.

10. The shaped article according to claim 9, wherein the thermosetting machinable stock has an ignition loss smaller than 5% by weight as determined at a temperature of 400°C in a nitrogen atmosphere and at a temperature-elevating rate of 20°C per minute.

11. The shaped article according to claim 9, wherein the thermosetting machinable stock has been obtained from a monomer mixture comprising the norbornene monomer having a tricyclic or higher cyclic structure, and at least 10% by weight, based on the total monomers, of a crosslinking monomer.

12. The shaped article according to claim 9, wherein the amount of the antioxidant is at least 0.5% by weight based on the resulting polymer.

13. The shaped article according to claim 9, which contains 0.5 to 2% by weight, based on the shaped article, of an elastomer.

14. The shaped article according to claim 9, wherein the thermosetting machinable stock has a glass transition point of at least 100°C and an ignition loss smaller than 3% by weight as determined at a temperature of 400°C in a nitrogen atmosphere and at a temperature-elevating rate of 20°C per minute.